**Europäisches Patentamt**

**European Patent Office**

**Office européen des brevets**

(19)

(11) Veröffentlichungsnummer: **0 187 923**
**B1**

(12) **EUROPÄISCHE PATENTSCHRIFT**

(45) Veröffentlichungstag der Patentschrift:
**18.01.89**

(21) Anmeldenummer: **85114849.4**

(22) Anmeldetag: **22.11.85**

(51) Int. Cl.⁴: **B 60 B 3/14**, F 16 B 41/00

(54) **Zentralverschluss.**

(30) Priorität: **16.01.85 DE 3501240**

(43) Veröffentlichungstag der Anmeldung:
**23.07.86 Patentblatt 86/30**

(45) Bekanntmachung des Hinweises auf die Patenterteilung:
**18.01.89 Patentblatt 89/3**

(84) Benannte Vertragsstaaten:
**DE FR GB IT NL SE**

(56) Entgegenhaltungen:
**DE-A- 2 301 920**
**DE-B- 2 818 512**
**US-A- 4 478 458**

(73) Patentinhaber: **Dr.Ing.h.c. F. Porsche**
**Aktiengesellschaft, Porschestrasse 42,**
**D-7000 Stuttgart 40 (DE)**

(72) Erfinder: **Lechner, Reinhard, Dipl.-Ing. FH,**
**Haidachstrasse 1, D-7530 Pforzheim (DE)**
Erfinder: **Bantle, Manfred, Dipl.-Ing.,**
**Eichendorffstrasse 115, D-7143 Vaihingen/Enz (DE)**

**Beschreibung**

Die Erfindung bezieht sich auf einen Zentralverschluss für Räder von Kraftfahrzeugen, nach dem Oberbegriff des Anspruchs 1.

Zentralverschlüsse für Räder von Kraftfahrzeugen sind aus der DE-B-2 818 512 bekannt. Diese weisen eine zentrisch im Rad angeordnete Schraubbuchse mit einem Radialbund auf. Sie sind auf einen Achskörper aufschraubbar und spannen eine zwischen dem Bund und einem Radträgerflansch angeordnete Nabenbuchse des Rades zwischen sich ein. Zur Sicherung des Rades gegen ein Losdrehen von der Nabe ist ein Splint oder dergleichen vorgesehen, der aber die Anforderungen an eine wirksame Diebstahlsicherung des Rades nicht ausreichend erfüllen kann. Zur Diebstahlsicherung von Kraftfahrzeugrädern wird daher eine aufwendige Schraubenbefestigung verwendet (DE-A-2 301 920), die ein in den Kopf der Radschraube eingesetztes Schloss aufweist, über das eine Hülse gesichert wird, die den Aussensechskant der Schraube abdeckt und diese gegen den Zugriff von Unbefugten absichern soll.

Aufgabe der Erfindung ist es, einen Zentralverschluss für Kraftfahrzeugräder zu schaffen, mit dem bei guter Wirksamkeit unter Verwendung einfacher Mittel eine Radsicherung realisierbar ist.

Diese Aufgabe wird erfindungsgemäss durch die kennzeichnenden Merkmale des Anspruchs 1 gelöst. Weitere vorteilhafte Ausbildungen beinhalten die Unteransprüche.

Die mit der Erfindung hauptsächlich erzielten Vorteile bestehen darin, dass über ein einziges Bauelement, nämlich über die Drehsicherungshülse, gleichzeitig eine Sicherung der Schraubbuchse gegen ein Losdrehen und eine Befestigung des Sicherungsschlosses erzielt wird. Ferner wird erreicht, dass die Hülse mit dem Schloss lösbar verbindbar ist und somit zum Einstecken in die Schraubbuchse auf die Gelenkwelle besser handhabbar wird. Damit unabhängig von der Stellung der Verzahnung an der Gelenkwelle die Sicherungshülse in die Schraubbuchse einführbar ist, wird die Hülse mit Spiel im polygonalen Abschnitt der Buchse gehalten. Dieses Spiel entspricht etwa der Breite der Zahnlücken der Gelenkwellenverzahnung.

Damit bei einem gewaltsamen Abdrehen des in der Schraubbuchse über die Zuhaltungselemente verriegelten Schlosses von der Sicherungshülse, diese nicht aus ihrem Sicherungseingriff im polygonalen Abschnitt herauskommt, ist der Abstand zwischen der Hülse und der Gelenkwelle so gewählt, dass ein Eingriff jederzeit gewährleistet ist.

Das Schloss ist vorzugsweise in einer kreisquerschnittsförmigen Ausnehmung im Kopf der Buchse angeordnet und schliesst die Schraubbuchse stirnseitig über einen Abschlussbund dicht ab.

Zur Festlegung einer Radkappe oder dergleichen ist zwischen dem Abschlussbund des Schlosses und der Schraubbuchse ein Halteelement in Form einer Hülse einspannbar, auf die endseitig die Radkappe aufklipsbar oder anderweitig befestigbar ist.

Ein Ausführungsbeispiel der Erfindung ist in der Zeichnung dargestellt und wird im folgenden näher beschrieben.

Es zeigt:

Fig. 1 einen Längsschnitt durch eine Schraubbuchse mit Sicherungshülse, Schloss und Gelenkwelle, und

Fig. 2 einen Schnitt nach der Linie II-II der Fig. 1.

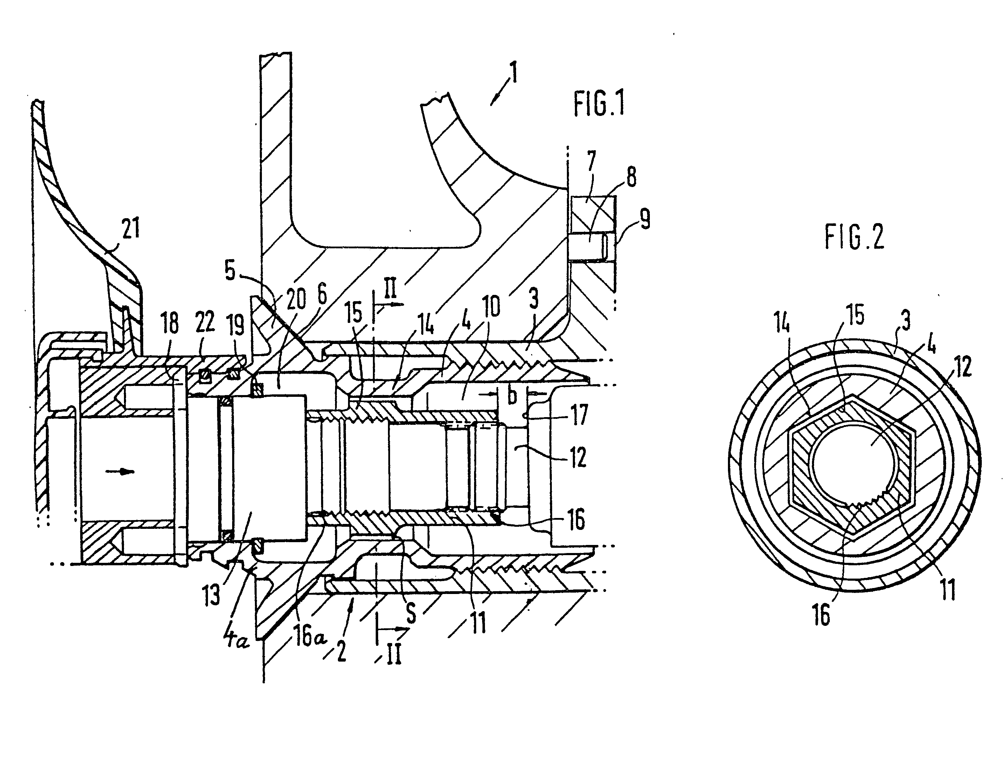

In Fig. 1 ist ein Rad 1 eines Kraftfahrzeugs dargestellt. Es ist mittels eines Zentralverschlusses 2 an einer Radnabe 3 befestigt. Der Verschluss umfasst im wesentlichen eine Schraubbuchse 4, welche in die Radnabe 3 einschraubbar ist. Zum Befestigen des Rades 1 an der Radnabe 3 weist die Schraubbuchse 4 einen radialen Bund 5 mit einer konischen Ringzone 6 auf. Zwischen dieser Ringzone 6 und einem Radialbund 7 der Radnabe 3 wird das Rad eingespannt. Als Verdrehsicherung sind über den Umfang verteilt mehrere Bolzen 8 vorgesehen, die in Bohrungen 9 des Radialbundes 7 eingreifen.

Die Schraubbuchse 4 weist eine Längsbohrung 10 auf, in der eine Drehsicherungshülse 11 angeordnet ist. Diese Hülse 11 ist umfangsseitig mit der Buchse 4 verbunden und mit ihrem radinneren Ende auf einer Gelenkwelle 12 gehalten. Das diesem radinneren Ende abgekehrte radäussere Ende der Hülse 11 ist mit einem Sicherungsschloss 13 zur Diebstahlsicherung des Rades 1 verbunden.

Die Schraubbuchse 4 weist einen etwa mittigen Abschnitt 14 in der Bohrung 10 mit polygonalförmiger Ausführung auf. Zur formschlüssigen Aufnahme der innenliegenden Sicherungshülse 11 weist diese ebenfalls eine der Buchse 4 entsprechende polygonalförmige Aussenkontur 15 auf. Die Verbindung der Hülse 11 mit der Gelenkwelle 12 erfolgt über eine Längsverzahnung 16.

Beim Einsetzen der Sicherungshülse 11 in die Schraubenbuchse 4 kann diese mit dem Schloss 13 verbunden sein, das über ein Gewinde 16a in der Hülse 11 befestigt wird. Denkbar wäre auch, dass das Schloss 13 mit der Hülse 11 einstückig ausgeführt ist.

Zur Montage wird die Drehsicherungshülse 11 in die Bohrung 10 der Schraubenbuchse 4 eingesteckt, wobei sie mit einem Verdrehspiel S im polygonalen Abschnitt 14 der Hülse 11 gehalten wird, wie Fig. 2 näher zeigt. Dieses Verdrehspiel S ist so gross, dass ein Aufstecken auf die Längsverzahnung 16 der Gelenkwelle 12 z.B. durch ein Gegenüberstehen der einzelnen Zähne der beiden Verzahnungen nicht behindert wird. So weist z.B. der Sechskant der Sicherungshülse 11 eine Schlüsselweite von 28,8 mm und der Sechskant des Abschnitts 14 der Schraubbuchse 4 eine Schlüsselweite von 30 mm auf.

Die Drehsicherungshülse 11 ist zur Gelenkwelle 12 mit einem Axialabstand b angeordnet. Dieser Abstand b ist so gross gewählt, dass bei einem Anliegen am Schaft 17 der Gelenkwelle 12 die Buchse 11 trotzdem noch in einem formschlüssigen Eingriff zur Buchse 4 steht. Eine axiale Verstellung der Sicherungshülse 11 ist dann möglich, wenn ein Umbefugter das Schloss 13 entfernen will und es so verdreht, dass sich die Hülse 11 über das Gewinde 16a vom Schloss 13 abdreht.

Durch die Festlegung der Sicherungshülse 11 an der Gelenkwelle 12 über die Verzahnung 16 und der weiteren formschlüssigen Verbindung mittels der polygonalen Ausbildung von Hülse 11 und Buchse 4 wird ein Losdrehen der Schraubbuchse 4 und somit ein Lösen des Rades 1 verhindert.

Im vorderen Bereich (freies Ende 4a) der Schraubbuchse 4 ist das Schloss 13 angeordnet, welches die Buchse 4 stirnseitig mittels eines Bundes 18 abschliesst. Die Bohrung 10 der Buchse 4 ist im Querschnitt kreisförmig ausgeführt, so dass das Schloss 13 in über die Zuhaltungselemente 19 gesicherter Stellung drehbar ist. Die Zuhaltungselemente 19 greifen in eine Hinterdrehung 20 der Hülse 11 ein, so dass ein axiales Entfernen verhindert wird. Zum Betätigen des Schlosses 13 von aussen dient ein Schlüssel, der nicht näher dargestellt ist und in Pfeilrichtung in das Schloss 13 eingesteckt wird.

Zur Befestigung einer Radkappe 21 oder dergleichen ist zwischen dem Abschlussbund 18 des Schlosses 13 und dem Radialbund 5 der Schraubbuchse 4 ein Halteelement 22 eingeklemmt, auf das eine Radkappe 21 oder dergleichen aufklipsbar ist.

## Patentansprüche

1. Zentralverschluss (2) für Räder von Kraftfahrzeugen mit einer zentrisch angeordneten und mit einer Gelenkwelle verbundenen Schraubbuchse (4), die das Rad unter Zwischenschaltung einer Radnabe haltend aufnimmt, dadurch gekennzeichnet, dass innerhalb der Schraubbuchse (4) des Zentralverschlusses (2) eine mit der Gelenkwelle (12) befestigte und in der Buchse (4) gehaltene Drehsicherungshülse (11) angeordnet ist, die mit ihrem der Gelenkwelle (12) abgekehrten freien Ende (4a) mit einem in die Buchse (4) einsteckbaren und verriegelbaren Sicherungsschloss (13) formschlüssig verbunden wird.

2. Zentralverschluss nach Anspruch 1, dadurch gekennzeichnet, dass die Schraubbuchse (4) eine Längsbohrung (10) mit einem polygonalförmig ausgeführten Abschnitt (14) aufweist, der zum Werkzeugeingriff dient und in dem die Drehsicherungshülse (11) über eine entsprechende Aussenkontur (15) gehalten ist.

3. Zentralverschluss nach den Ansprüchen 1 oder 2, dadurch gekennzeichnet, dass die Drehsicherungshülse (11) axial in die Schraubbuchse (4) auf eine Längsverzahnung (16) der Gelenkwelle (12) aufschiebbar ist, wobei über die polygonalförmige Aussenkontur (15) der Sicherungshülse (11) diese mit einem Verdrehspiel (S) in dem polygonalförmigen Abschnitt (14) der Schraubbuchse (4) gehalten wird.

4. Zentralverschluss nach Anspruch 1, dadurch gekennzeichnet, dass die Drehsicherungshülse (11) ein derartiges axiales Verschiebespiel (b) zur Gelenkwelle (12) aufweist, dass die polygonalförmige Aussenkontur (15) der Sicherungshülse (11) mit der polygonalförmigen Innenkontur (Abschnitt 14) der Schraubbuchse (4) noch in formschlüssigem Eingriff steht.

5. Zentralverschluss nach Anspruch 4, dadurch gekennzeichnet, dass das Verdrehspiel (S) eine solche Grösse aufweist, dass das Sicherungsschloss (13) bei jeder Stellung der Schraubbuchse (4) auf die Längsverzahnung (16) der Gelenkwelle (12) aufsteckbar ist.

6. Zentralverschluss nach Anspruch 1, dadurch gekennzeichnet, dass die Drehsicherungshülse (11) mit dem Schloss (13) einstückig ausgeführt ist.

7. Zentralverschluss nach einem oder mehreren der vorhergehenden Ansprüche, dadurch gekennzeichnet, dass die Längsbohrung (10) der Schraubbuchse (4) im Bereich des Sicherungsschlosses (13) eine diesem entsprechende Kreisquerschnittsform aufweist und mit einer Hinterdrehung (20) versehen ist, die von Zuhaltungselementen (19) des Sicherungsschlosses (13) hintergriffen wird.

8. Zentralverschluss nach Anspruch 7, dadurch gekennzeichnet, dass das Sicherungsschloss (13) einen Abschlussbund (18) aufweist, der stirnseitig der Schraubbuchse (4) abdichtend anliegt und zwischen diesem Abschlussbund (18) und einem weiteren radialen Bund (5) an der Schraubbuchse (4) ein Halteelement (22) für eine Radkappe (21) und/oder eine Nabenkappe festsetzbar vorgesehen ist.

## Claims

1. A central locking device (2) for the wheels of motor vehicles, having a centred screw bush (4) connected with a drive shaft, the bush receiving and holding the wheel, with the interposition of a wheel hub, characterised in that a rotation-preventing sleeve (11) is arranged within the screw bush (4) of the central locking device (2) and is secured to the drive shaft (12) and held in the bush (4), the free end (4a) of the sleeve (11) facing away from the drive shaft (12) being positively connected with a securing lock (13) which can be inserted into the bush (4) and bolted.

2. A central locking device according to Claim 1, characterised in that the screw bush (4) has a longitudinal bore (10) with a polygonally shaped portion (14) for engagement by a tool and in which the rotation-preventing sleeve (11) is held via an appropriate outer contour (15).

3. A central locking device according to Claims 1 or 2, characterised in that the rotation-preventing sleeve (11) can be pushed axially into the screw bush (4) onto a longitudinal toothing (16) of the drive shaft (12), the securing sleeve (11) being held via its polygonal outer contour (15) in the polygonal portion (14) of the screw bush (4) with torsional play (S).

4. A central locking device according to Claim 1, characterised in that the rotation-preventing sleeve (11) has sufficient axial shift play (b) in relation to the drive shaft (12) for the polygonal outer contour (15) of the securing sleeve (11) to remain in positive engagement with the polygonal inner contour (portion 14) of the screw bush (4).

5. A central locking device according to Claim 4, characterised in that the torsional play (S) is of sufficient magnitude to enable the securing lock (13) to be engaged with the longitudinal toothing (16) of the drive shaft (12) in any position of the screw bush (4).

6. A central locking device according to Claim 1, characterised in that the rotation-preventing sleeve (11) is constructed in one piece within the lock (13).

7. A central locking device according to one or more of the preceding claims, characterised in that the longitudinal bore (10) of the screw bush (4) has in the region of the securing lock (13) a circular cross-section shape corresponding to this lock and is provided with an annular recess (20) which is engaged by retaining elements (19) of the securing lock (13).

8. A central locking device according to Claim 7, characterised in that the securing lock (13) has an end collar (18) which rests in a sealing manner on the front face of the screw bush (4) and in that a holding element (22) for a wheel cap (21) and/or a hub cap is provided so as to be securable between this end collar (18) and a further radial collar (5) on the screw bush (4).


**Revendications**

1. Verrouillage central (2) pour roues de véhicule automobile avec un manchon vis (4) disposé centralement et relié à un arbre articulé, manchon qui reçoit la roue en intercalant un moyeu de roue de maintien, caractérisé en ce qu'un manchon de sécurité de rotation (11) est disposé à l'intérieur du manchon à vis (4) du verrouillage central (2), fixé à l'arbre articulé (12) et maintenu dans le manchon (4), manchon de sécurité qui est relié en interpénétration de forme avec son extrémité (4a) libre opposée à l'arbre articulée (12), à une serrure de sécurité (13) susceptible d'être enfichée et verrouillée dans le manchon (4).

2. Verrouillage central selon la revendication 1, caractérisé en ce que le manchon à vis (4) présente un alésage longitudinal (10) avec une section(14) réalisée en forme polygonale, qui sert de prise à outil et dans laquelle le manchon de sécurité de rotation (11) est maintenu par un contour extérieur (15) correspondant.

3. Verrouillage central selon les revendications 1 ou 2, caractérisé en ce que le manchon de sécurité de rotation (11) est susceptible d'être appliqué axialement dans le manchon à vis (4), sur une denture longitudinale (16) de l'arbre acticulé (12), ce manchon de sécurité étant à cette occasion maintenu par le contour extérieur (15) de forme polygonale du manchon de sécurité (11), avec un jeu en rotation (S) dans la sectionde forme polygonale (14) du manchon à vis (4).

4. Verrouillage central selon la revendication 1, caractérisé en ce que le manchon de sécurité de rotation (11) présente un jeu de déplacement (b) axial par rapport à l'arbre articulé (12), d'un type tel, que le contour extérieur (15) de forme polygonale du manchon de sécurité (11) est encore en prise de forme avec le contour intérieur de forme polygonale (section 14) du manchon à vis (4).

5. Verrouillage central selon la revendication 4, caractérisé en ce que le jeu en rotation (S) est de telle valeur que la serrure de sécurité (13) est susceptible d'être enfichée pour chaque position du manchon à vis (4) sur la denture longitudinale (16) de l'arbre articulé (12).

6. Verrouillage central selon la revendication 1, caractérisé en ce que le manchon de sécurité de rotation (11) est réalisé en une seule pièce avec la serrure (13).

7. Verrouillage central selon une ou plusieurs des revendications précédentes, caractérisé en ce que dans la zone de la serrure de sécurité (13), l'alésage longitudinal (10) du manchon à vis (4) présente une forme de section circulaire correspondant à celle-ci et est pourvue d'un tournage arrière (20) qui est saisi par des éléments de maintien (19) de la serrure de sécurité (13).

8. Verrouillage central selon la revendication 7, caractérisé en ce que la serrure de sécurité (13) présente une collerette limite (18) qui appuie de manière étanche côté frontal du manchon à vis (4) et qu'un élément de maintien (22) pour un capuchon de roue (21) et/ou un capuchon de moyeu est prévu sur le manchon à vis (4) pour être fixé avec un ajustement serré entre cette collerette limite (18) et une autre collerette (5) radiale.

FIG.1

FIG.2